# EUROPÄISCHE PATENTSCHRIFT

(11) **EP 1 576 404 B1**
(45) Veröffentlichungstag und Bekanntmachung des Hinweises auf die Patenterteilung: **10.08.2011**
(21) Anmeldenummer: 03732549.5
(22) Anmeldetag: 06.06.2003
(51) Int. Cl.: G02B 21/00, G02B 21/06

(54) **MIKROSKOP MIT BEOBACHTUNGSRICHTUNG SENKRECHT ZUR BELEUCHTUNGSRICHTUNG**
MICROSCOPE WITH A VIEWING DIRECTION PERPENDICULAR TO THE ILLUMINATION DIRECTION
MICROSCOPE OU LE SENS DE L'OBSERVATION EST PERPENDICULAIRE AU SENS DE L'ECLAIRAGE

(30) Priorität: 09.12.2002 DE 10257423
(43) Veröffentlichungstag der Anmeldung: 21.09.2005
(60) Teilanmeldung: 08000060.7
(73) Patentinhaber: EUROPÄISCHES LABORATORIUM FÜR MOLEKULARBIOLOGIE (EMBL), D-69117 Heidelberg (DE)
(72) Erfinder: STELZER, Ernst, H. K., 74909 Meckesheim (DE); ENDERS, Sebastian, 70188 Stuttgart (DE); HUISKEN, Jan, 69115 Heidelberg (DE); LINDEK, Steffen, 64295 Darmstadt (DE); SWOGER, James, H., 69115 Heidelberg (DE)
(74) Vertreter: Harrison, Robert John
(86) Internationale Anmeldenummer: PCT/EP2003/005991
(87) Internationale Veröffentlichungsnummer: WO 2004/053558

(56) Entgegenhaltungen:
- US-A- 4 852 985
- US-A- 5 570 228
- US-A- 5 903 781
- FUCHS E ET AL: "THIN LASER LIGHT SHEET MICROSCOPE FOR MICROBIAL OCEANOGRAPHY" OPTICS EXPRESS, OPTICAL SOCIETY OF AMERICA, WASHINGTON, DC,, US, Bd. 10, Nr. 2, 28. Januar 2002 (2002-01-28), Seiten 145-154, XP001157856 ISSN: 1094-4087 in der Anmeldung erwähnt

## Beschreibung

Die vorliegende Erfindung betrifft ein Mikroskop gemäß dem Oberbegriff des Anspruchs 1.

Im Gegensatz zu der Arbeit an einzelnen Zellen sind lichtmikroskopische Untersuchungen an Embryonen und anderen entwicklungsbiologisch relevanten Proben mit den besonderen Problemen der Absorption und des Auflösungsverlustes behaftet. Zum Beispiel können biologische Fragestellungen im Zusammenhang mit Genexpressionsmustern in sich entwickelnden Organismen derzeit nur schwer mit lichtmikroskopischen Bildgebungsverfahren beantwortet werden, da diese oft zu langsam, zu gering auflösend oder technisch komplex sind oder vom freien Arbeitsabstand oder von der Probenhalterung her eine Beobachtung von millimetergroßen Objekten nicht gestatten. Eine akzeptable Lösung muß die Handhabung großer Proben und eine schnelle, hochauflösende Aufnahme der Daten erlauben und dabei technisch möglichst einfach zu realisieren sein.

Aus der wissenschaftlichen Literatur ist ein Mikroskop für die ozeanographische Forschung bekannt, das dadurch gekennzeichnet ist, dass es mit einem Laser eine Beleuchtungslichtebene in einer Probenkammer erzeugt und senkrecht zu dieser Ebene mit einer Kamera die in der Beleuchtungslichtebene erzeugten Fluoreszenzsignale detektiert [E. Fuchs et al., Opt. Express 10, 145 (2002)]. Dieses Mikroskop ähnelt dem Ultramikroskop von H. Siedentopf und R. Zsigmondy [Ann. Phys. 10(4), 1 (1903)] und wird für die Detektion einzelner freischwimmender Partikel wie Bakterien eingesetzt. Es ist nicht dafür geeignet, millimetergroße, beispielsweise entwicklungsbiologische Proben aufzunehmen, da eine Küvette als Probenhalter dient. Ebenso ist es nicht für dreidimensionale Aufnahmen geeignet, da es über keine Möglichkeit verfügt, die Probe relativ zur Beleuchtungslichtebene zu bewegen.

Aus der DE 19720513 A1 bzw. der US 5,903, 781 sowie aus der wissenschaftlichen Literatur [D. Huber et al., J. Microsc. 202,208(2001)] ist ein Instrument für die dreidimensionale Makrographie bekannt, bei dem eine Anordnung zur Erzeugung von Lichtebenen für die photographische Erfassung von Objekten eingesetzt wird. Dabei wird ein Objekt durch eine Beleuchtungsebene bewegt und das reflektierte und gestreute Licht mit einer Kamera detektiert. Dieses Gerät dient dazu, dreidimensionale Rekonstruktionen von zentimetergroßen Objekten anzufertigen. Es ist aber nicht für die Verwendung von Fluorezenzsignalen und auch nicht für die hochaufgelöste Wiedergabe der Objekte geeignet. Es wird eine Spaltfigurblende in Verbindung mit einer Spiegelanordnung für die Erzeugung der Lichtebenen eingesetzt. Durch den Einsatz eines nur linear beweglichen Probentischs kann die Probe nicht gedreht werden, so dass keine Beobachtung der Probe von mehreren Seiten möglich ist.

Aus der US-Patentschrift Nr. 5,570,228 (Greenberg) ist ein Mikroskop mit einem Beleuchtungsstrahlengang und einem Detektionsstrahlengang bekannt. In dem Beleuchtungsstrahlengang ist eine Fokussieranordnung vorgesehen zur Erzeugung eines in Richtung einer beleuchteten Achse des Beleuchtugsstrahlengangs ausgedehnten linearartigen Objektbeleuchtungsbereichs. Die Detektionseinrichtung des Detektionsstrahlengangs steht im Wesentlichen orthagonal zu dem linearartigen Objektbeleuchtungsbereich. Eine Bewegungsanordnung zur Erzeugung einer relativen Bewegung zwischen dem linearartigen Objektbeleuchtungsbereich und einem zu untersuchenden Proobjekt ist auch aus dem Greenberg-Patent bekannt. Allerdings weist Greenberg keine Halterung mit einer Rotationsachse innerhalb einer Probenkammer auf wobei die Rotationsachse im Wesentlichen in Schwerkraftrichtung angeordnet ist.

Ebenfalls bekannt ist eine weitere US-Patentschrift Nr. 5,903,781 (Huber), welche ebenfalls ein Mikroskop mit einem Beleuchtungsstrahlengang und einem Detektionsstrahlengang offenbart. Dieses Mikroskop weist eine Detektionseinrichtung des einen Detektionsstrahlengangs welcher mehrungsweise orthagonal zu dem flächenartigen Objektbeleuchtungsbereich steht und eine Bewegungsanordnung zur Erzeugung einer Relativbewegung zwischen dem flächenartigen Objektbeleuchtungsbereich und einem zu untersuchenden Objekt aufweist. Das Huber-Patent weist allerdings ebenfalls keine Halterung innerhalb einer Probenkammer mit einer Rotationsachse, die in Schwerkraftrichtung angeordnet ist, auf.

Ferner sind aus der technisch-wissenschaftlichen Literatur Aufbaue für optische Tomographie bekannt. Die optische Projektionstomographie wird beispielsweise in der Genexpressionsanalyse eingesetzt [J. Sharpe et al., Science 296,541 (2002)]. Dabei handelt es sich um ein System, in dem Projektionen biologischer Proben aufgezeichnet werden, wobei die Probe um eine Achse senkrecht zur Detektionsrichtung gedreht wird. Da die Probe nicht senkrecht zur Detektionsachse durch eine Beleuchtungslichtebene selektiv beleuchtet wird, hat das Mikroskop im Gegensatz zum erfindungsgemäßen Mikroskop eine sehr große Schärfentiefe, durch den ein großer Teil der Probe erfasst wird. Daher bietet das Mikroskop nicht die Möglichkeit, die Probe längs der Detektionsachse zu bewegen, um ein dreidimensionales Bild aufzunehmen. Ein dreidimensionales Bild der Probe mit räumlicher Auflösung ist somit nur durch die Rekonstruktion aus den Projektionen möglich.

Aus der DE 43 26 473 C2 und Stelzer et al. "A new tool for the observation of embryos and other large specimens: confocal theta fluorescence microscopy" J. Microscopy, Vol. 179, Pt 1, July 1995, pp 1-10 ist ein konfokales Theta-Mikroskop bekannt, das dadurch gekennzeichnet ist, dass es ein erstes Objektiv zur Punktbeleuchtung und ein zweites Objektiv zur Abbildung des Objektlichts auf einen Punktdetektor verwendet, wobei die Detektionsrichtung annähernd senkrecht auf der Beleuchtungsrichtung steht. Dadurch ist der konfokale Überlagerungsbereich des Beleuchtungsvolumens mit dem Detektionsvolumen besonders klein und das Mikroskop erreicht eine fast isotrope Auflösung, deren Größenordnung der lateralen Auflösung eines konfokalen Mikroskops entspricht.

Dieses Theta-Mikroskop ist jedoch konfokal arrangiert, was hohe Anforderungen an die relative Justierung des Beleuchtungs- und des Detektionsbrennpunkts stellt. Außerdem ist es trotz eines großen Arbeitsabstands nicht ohne weiteres in der Lage, Aufnahmen von großen Objekten zu machen. Dies liegt daran, dass das Objekt im Theta-Mikroskop bei der Objektrasterung nicht genug Bewegungsfreiheit hat und dass es wegen der Punktdetektion in drei Richtungen gerastert werden muss, wodurch eine Aufnahme sehr lange dauert. Das Beleuchtungslicht wird zu einem Beleuchtungspunkt fokussiert.

Aus den Veröffentlichungen "Orthagonal-plane-fluorescent optical sectioning: three-dimensional imaging of macroscopic biological speciment" Voie et al., G. J. of Microscopy, Vol. 170, Pt 3, June 1993, pp 229-236, "Imaging the intact guinea pig tympanic bulla by orthogonal-plane fluorescence optical sectioning microscopy", Voie, Hearing Research, Bd. 171 (2002), pp 119-128 und "Three-dimensional reconstruction of the cochlea from twodimensional images of optical sections", Voie et al., Computerized Medical Imaging and Graphics, Bd. 19, Nr. 5, pp 377-384 (1995) ist ein Mikroskop mit einem Beleuchtungsstrahlungseingang und einem Detektionsstrahlengang bekannt. Das Mikroskop weist einen Beleuchtungsstrahlengang mit Fokussieranordnung zur Erzeugung eines in Richtung einer Beleuchtungsachse des Beleuchtungsstrahlengangs und quer dazu ausgedehnten Objektbeleuchtungsbereichs aus. Weiter weist das Mikroskop gemäß dieser Veröffentlichung eine Detektionseinrichtung auf welche mehrungsweise orthagonal zu dem Objektbeleuchtungsbereich steigt und eine Bewegungsanordnung zur Erzeugung einer Relativbewegung zwischen dem Objektbeleuchtungsbereich und einem zu untersuchenden Bereich.

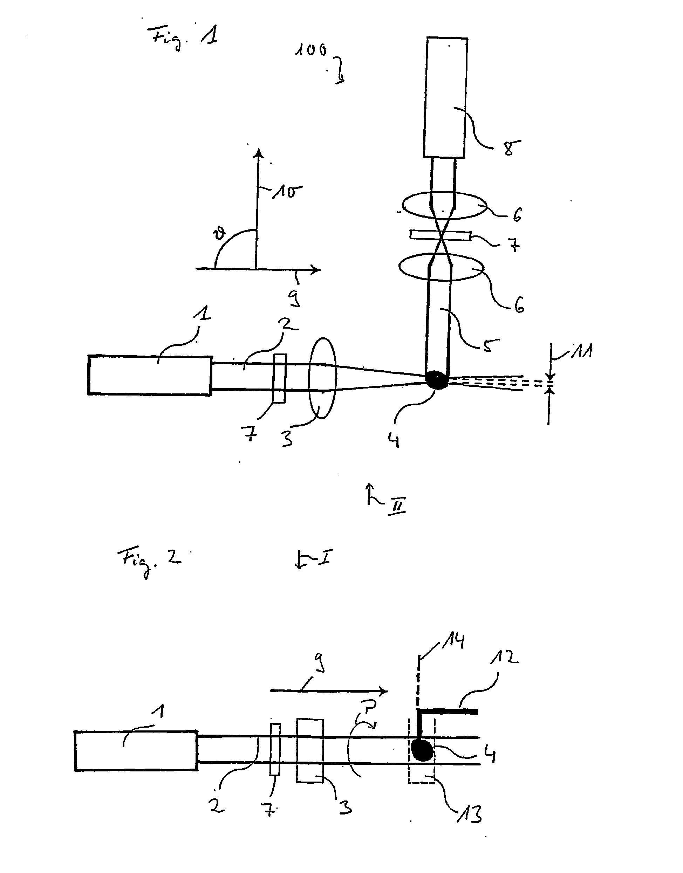

Die Veröffentlichung "Imaging the intact guinea pig tympanic bulla by orthogonal-plane fluorescence optical sectioning microscopy" zeigt auf Abbildung 2 eine Probenkammer mit einer Rotationsachse, die orthogonal zur Schwerkraftrichtung angeordnet ist. Die Probe kann in dieser Richtung innerhalb der Probenkammer gedreht werden. Die Probenkammer kann selbst mit dem zu untersuchenden Objekt in Schwerkraftrichtung (x-Richtung, Winkel α) gedreht werden.

Aus der WO 02/095476 A2 bzw, der US 5710625 A1 sind Probenkammern für die optische Untersuchung von objekten bekannt, bei denen eine rotierbare Halterung mit einer in Schwerkraftrichtung liegenden rotationsachse innerhalb der Probekammer angeordnet ist.

Die der vorliegenden Erfindung zugrundeliegende Aufgabe besteht darin, ein Mikroskop vorzuschlagen, das für die hochauflösende dreidimensionale Beobachtung von millimetergroßen biologischen Objekten geeignet ist und eine gute Bildqualität ermöglicht.

Diese Aufgabe wird erfindungsgemäß durch das im Anspruch 1 angegebene Mikroskop gelöst. Die Probe wird durch einen dünnen Lichtstreifen beleuchtet und die Beobachtung erfolgt senkrecht zu diesem Objektbeleuchtungsbereich, der eine flächenartige Ausdehnung hat. Die Dicke des Beleuchtungslichtstreifens bestimmt somit zu wesentlichen Teilen die Schärfentiefe des Systems. Für die Bildaufnahme wird das Objekt durch den raumfesten Lichtstreifen bewegt, und Fluoreszenz- oder/und Streulicht werden in jeder Position der Rasterbewegung mit einem flächigen Detektor aufgenommen. Da das Objekt in der bevorzugten Ausführungsform rotiert werden kann, ist es möglich, solche dreidimensionalen Aufnahmen von mehreren Seiten zu machen und sie zu einer einzigen dreidimensionalen Aufnahme zu kombinieren, deren Auflösung im Wesentlichen durch die laterale Auflösung der einzelnen Aufnahmen bestimmt wird. Die hohe Auflösung dieser Aufnahme ist das Ergebnis der fokussierten Beleuchtung, der senkrechten Detektion, der Bewegung des Objekts und der Kombination der einzelnen Aufnahmen durch Bildverarbeitung.

Die Probe wird durch eine Halterung von oben in einer wassergefüllten Probenkammer gehalten und kann um die senkrechte, also in Schwerkraftrichtung liegende Achse gedreht werden.

Die Halterung und Drehung hat den Vorteil, dass bei der Drehung der Probe für eine Aufnahme aus einer anderen Richtung keine Veränderung der auf die Probe wirkende Schwerkraft erfolgt und sie sich nicht verformt. Bei einer solchen Drehung der Probe in der Probenkammer wird die Probenkammer nicht bewegt, so dass sich die optischen Weglängen (abgesehen von Unterschieden durch den Brechungsindex in der Probe selbst) während des Bewegungsvorgangs nicht ändern. Dies führt zu einer besseren Bildqualität. Vorteilhafterweise kann die auf diese Art gehaltene Probe so ausgerichtet werden, dass der Einfluss von stark streuenden oder absorbierenden Teilen der Probe bei der Bildaufnahme minimiert wird.

Das erfindungsgemäße Mikroskop verfügt über einen Beleuchtungslichtpfad und einen Detektionslichtpfad, die im Objektbeleuchtungsbereich vorzugsweise orthogonal zueinander stehen, wodurch die Detektionsrichtung senkrecht auf der Beleuchtungslichtebene steht. Jedoch werden die Vorteile der Erfindung in ausreichendem Masse auch dann noch erzielt, wenn der Winkel zwischen der Beleuchtungs- und der Detektionsrichtung bzw. zwischen der Beleuchtungslichtebene und der Detektionsrichtung in nicht zu großem Maße von einem rechten Winkel abweicht.

Vorteilhafterweise wird als Lichtquelle ein Laser eingesetzt, der die selektive Anregung von Fluoreszenzemission in der Probe ermöglicht. Zum Fokussieren des Beleuchtungslichts zu einem dünnen Streifen wird vorzugsweise eine Zylinderlinse verwendet, es kann aber auch ein anderes fokussierendes Element (beispielsweise ein holographisches Element oder eine konische Linse (Axicon) oder eine Phasenplatte oder andere Elemente zur Erzeugung eines Bessel-Strahls) eingesetzt werden.

Das detektierte Licht ist vorzugsweise Fluoreszenzlicht. Möglich ist aber auch die Detektion von Streulicht. Das Detektionslicht wird vorzugsweise mit einem telezentrischen System aus zwei Objektiven auf den Detektor abgebildet. Geeignet sind aber auch andere optische Baugruppen.

Die Detektion erfolgt vorzugsweise mit einem flächigen Detektor, der das ganze Feld detektiert, beispielsweise einer CCD-Kamera. Durch die Verwendung eines solchen Detektors ist eine schnelle Bildaufnahme möglich, und die Bewegung der Probe für eine dreidimensionale Aufnahme ist auf eine Richtung (nämlich längs der Detektionsachse) beschränkt. Die Auflösung des Systems wird durch die laterale Auflösung der Detektionsoptik bestimmt.

Da die Fläche der derzeit verfügbaren Detektoren im allgemeinen nicht ausreicht um eine vollständige, hochaufgelöste Aufnahme von mehreren Millimeter großen Objekten zu gewährleisten, besteht in einer Ausführungsform des erfindungsgemäßen Mikroskops die Möglichkeit, den Detektor in der Detektionsebene, also im Wesentlichen seitlich zur Detektionsrichtung, zu bewegen, um Bilder von Teilen des Objekts aufzunehmen, die zu einem Bild des gesamten Objekts zusammengesetzt werden können.

In einem einfachen, bevorzugten Aufbau werden keine optischen Elemente zur Führung der Strahlengänge verwendet. Es können aber beispielsweise Spiegel, dichroitische Spiegel, Strahlteiler oder optische Fasern für die Führung der Strahlengänge eingesetzt werden. Da in dem erfindungsgemäßen Mikroskop die Beleuchtungs- und Detektionsstrahlengänge getrennt sind, kann auf den in anderen Fluoreszenzmikroskopen üblichen Einsatz passiver Bauteile wie dichroitischer Spiegel oder aktiver, beispielsweise akusto-optischer Bauteile, für die Trennung von Beleuchtungs- und Fluoreszenzlicht verzichtet werden.

Es besteht die Möglichkeit, den Aufbau zum Beispiel durch einen weiteren Beleuchtungslichtpfad zu ergänzen, dessen Licht zu einem Streifen bzw. Objektbeleuchtungsbereich fokussiert wird, der vorzugsweise in der gleichen Ebene wie der Objektbeleuchtungsbereich des ersten Beleuchtungslichtpfads liegt, so dass eine bessere Ausleuchtung der Probe erreicht wird. Das Licht für diesen weiteren Beleuchtungslichtpfad kann aus derselben Lichtquelle kommen. Vorteilhafterweise wird die Probe hierbei aus zwei gegenüberliegenden Richtungen beleuchtet. Im Gegensatz zu der 4Pi-kon- fokalen Mikroskopie [S. Hell und E. H. K. Stelzer, J. Opt. Soc. Am. A 9, 2159(1992)] ist der Justieraufwand in dem erfindungsgemäßen Mikroskop gering, denn es müssen nur zwei mehrere Mikrometer dicke Lichtstreifen überlagert werden. Außerdem muss die Phase der Strahlen nicht berücksichtigt werden.

Das erfindungsgemäße Mikroskop kann aber auch als nicht-konfokales 4Pi-Theta-Mikroskop betrieben werden. Hierbei wird die Probe wie in einem 4Pi(A)-konfokalen Mikroskop aus zwei entgegengesetzten Richtungen kohärent beleuchtet, so dass längs dieser Beleuchtungsachse ein Interferenzmuster auftritt, das die Intensität in der Beleuchtungslichtebene räumlich moduliert. Dadurch wird das Beleuchtungsvolumen halbiert, und durch ein Verschieben des Interferenzmusters (durch eine Verstellung der Phasendifferenz zwischen den Strahlen) ist es möglich, sich ergänzende Bereiche der Probe zu beleuchten, so dass ein Bild mit erhöhter Auflösung längs der Beleuchtungsachse rekonstruiert werden kann.

Es besteht die Möglichkeit, den Aufbau z. B. durch einen weiteren Detektionslichtpfad zu ergänzen, durch den Licht detektiert wird, das in entgegengesetzter Richtung zum bestehenden Detektionslichtpfad emittiert wird. Dadurch kann die Detektion des Lichts stets so erfolgen, dass das Licht einen möglichst kurzen Weg durch die Probe zurücklegt.

Zusätzlich können auch Streulichtdetektoren oder/und Transmissionslichtdetektoren vorgesehen sein.

Es ist in einer weiteren Ausführungsform des erfindungsgemäßen Mikroskops auch möglich, die Beleuchtungs- und Detektionspfade um das raumfeste zu untersuchende Objekt zu drehen. Dann muss jedoch die Probe bzw. das Objekt im allgemeinen nachgeführt werden, um in weiteren Aufnahmen abgebildet zu werden.

Das zu untersuchende Objekt befindet sich bei einer Aufnahme in dem flächenartigen Objektbeleuchtungsbereich, wobei das Objekt wesentlich größer als die Dicke dieses Bereichs ist. Eine zweidimensionale Aufnahme der sich in diesem Bereich befindlichen Teile des Objekts erfolgt durch den flächigen Detektor. Eine dreidimensionale Aufnahme des Objekts erfolgt durch Rasterung des Objekts in Detektionsrichtung durch den raumfesten Beleuchtungsbereich (oder durch Rasterung des Beleuchtungsbereichs durch das Objekt), wobei in jeder Position des Objekts ein zweidimensionales Bild aufgenommen wird. Die Synchronisation von Bewegung, Beleuchtung und Detektion wird vorteilhafterweise optimiert, um die Probenbelastung zu minimieren.

Vorzugsweise wird die Drehung des Objekts (ebenso wie die lineare Rasterbewegung) elektronisch gesteuert, so dass die Aufnahme mehrerer Bilder aus verschiedenen Winkeln automatisiert werden kann und die Geschwindigkeit der Probenuntersuchung erhöht wird. Die Anzahl der Bilder und die Drehwinkel der Probe, die für eine Gesamtaufnahme mit einer bestimmten räumlichen Auflösung notwendig sind, können zugunsten einer kurzen Probenuntersuchungszeit und damit einer geringen Probenbelastung optimiert werden.

Vorteilhafterweise kann das zu untersuchende Objekt auch um die Beleuchtungsachse gekippt werden, so dass es noch aus zusätzlichen Richtungen beobachtet werden kann. In einer weiteren Ausführungsform des erfindungsgemäßen Mikroskops ist ein zweiter Detektionslichtpfad vorhanden, der die Detektion des nach unten emittierten Lichts erlaubt. Wird dann der Objektbeleuchtungsbereich um 90 Grad um die Beleuchtungsachse gedreht (beispielsweise durch die Drehung der Zylinderlinse), so kann die Probe horizontal optisch geschnitten werden (und durch eine vertikale Rasterbewegung kann eine dreidimensionale Aufnahme erzeugt werden).

Vorteilhafterweise kann in dem erfindungsgemäßen Mikroskop die Zylinderlinse vorzugsweise hochfrequent bewegt werden, beispielsweise im Beleuchtungslichtpfad hochfrequent längs der Zylinderachse und/oder der Beleuchtungsachse bewegt werden oder/und die Zylinderachse hochfrequent in Richtung der Beleuchtungsachse geneigt werden, so dass der Einfluß von Verschmutzungen auf der Zylinderlinse weniger stark ist und die Probe gleichmäßiger ausgeleuchtet wird.

Vorteilhafterweise kann die Halterung vieler biologischer Proben einfach durch Einbetten in ein Gel (ca. 99% Wasser) oder eine andere polymerisierende oder sich vernetzende Struktur realisiert werden.

Die durch Drehung des zu untersuchenden Objekts realisierten Aufnahmen aus verschiedenen Richtungen erlauben eine dreidimensionale Rekonstruktion desselben durch die Kombination der einzelnen dreidimensionalen Rohdatensätze. Da bei der bevorzugten Ausführungsform des erfindungsgemäßen Mikroskops nur ein Teil der Probe optimal abgebildet wird (im allgemeinen die beiden Oktanten, die innerhalb des rechten Winkels zwischen Beleuchtungs- und Detektionsachse liegen), sind mindestens vier Aufnahmen für eine gute Rekonstruktion der gesamten Probe notwendig. Diese Aufnahmen lassen sich so kombinieren, dass die Rekonstruktion eine höhere Auflösung bietet als die einzelnen Aufnahmen. Die Qualität des rekonstruierten Bilds läßt sich durch Aufnahmen entlang weiterer Winkel verbessern, so dass die toten Winkel der gemeinsamen optischen Übertragungsfunktion aufgefüllt werden.

Durch die Verwendung von Objektiven mit langen Brennweiten steht ein Arbeitsabstand von mehreren Millimetern zur Verfügung. Die Größe des Objekts wird dadurch in erster Linie durch seine Lichtdurchlässigkeit begrenzt: Sofern man das Objekt vollständig (und nicht nur die Randschichten) untersuchen will, muß hinreichend Licht aus jedem Teil von ihm in der einen oder anderen Orientierung den Detektor erreichen.

Wie vorangehend bereits ausgeführt, kann es in Abhängigkeit von der Vergrößerung des optischen Systems im Detektionsstrahlengang erforderlich sein, den dem Detektionsstrahlengang zugeordneten Detektor zu verschieben, um, im Wesentlichen bedingt durch die begrenzte Anzahl der Detektorpixel bei zweidimensionalen Pixeldetektoren, ein vollständiges Bild des zu untersuchenden Objekts aufnehmen zu können. Das heißt, die Auflösung des Gesamtsystems ist im Wesentlichen nicht durch die numerische Apertur der optischen Komponenten, insbesondere der verwendeten Linsen, und somit durch die Auflösung in der Probe selbst begrenzt, sondern mehr durch die technischen Limitationen, die im Bereich von Pixeldetektoren, wie sie beispielsweise in CCD-Kameras Anwendung finden, vorhanden sind. Diesem Problem kann entgegengetreten werden durch den Einsatz hochauflösender Pixeldetektoren mit einer Pixelzahl im Bereich von mehreren Millionen, wie sie beispielsweise in der Astronomie oder der digitalen Fotografie eingesetzt werden. Diese Pixeldetektoren sind jedoch vergleichsweise teuer und langsam.

Ein weiterer Aspekt der außerhalt der vorliegenden Erfindung liegt, sieht ein Mikroskop mit wenigstens einem Beleuchtungsstrahlengang und wenigstens einem Detektionsstrahlengang vor, das dadurch gekennzeichnet ist, dass bei jedem Beleuchtungsstrahlengang eine Fokussieranordnung vorgesehen ist zur Erzeugung eines in Richtung einer Beleuchtungsachse des Beleuchtungsstrahlengangs ausgedehnten linienartigen Objektbeleuchtungsbereichs, dass eine Detektionsrichtung des wenigstens einen Detektionsstrahlengangs näherungsweise orthogonal zu dem linienartigen Objektbeleuchtungsbereich steht, und dass wenigstens eine Bewegungsanordnung vorgesehen ist zur Erzeugung einer Relativbewegung zwischen dem linienartigen Objektbeleuchtungsbereich und einem zu untersuchenden Objekt.

Gemäß diesem Aspekt wird also der Objektbeleuchtungsbereich im Wesentlichen auf eine Dimension, nämlich die Längsdimension, begrenzt, so dass von der vorangehend diskutierten flächenartigen Struktur des Objektbeleuchtungsbereichs zu einer langgestreckten bzw. linienartigen Struktur übergegangen wird. Mit diesem linienartigen Objektbeleuchtungsbereich werden entsprechend auch nur linienartige Abschnitte eines zu untersuchenden Objekts ausgeleuchtet und zur Fluoreszenz angeregt bzw. zur Lichtstreuung genutzt. Diese nunmehr erzeugten linienartigen beleuchteten Bereiche können durch den oder die Detektionsstrahlengänge auf Pixeldetektoren abgebildet werden, die eine langgestreckte Struktur haben, also im Wesentlichen in einer Dimension aufeinander folgend angeordnete Pixel aufweisen. Derartige im Prinzip als "eindimensionale" Pixeldetektoren zu interpretierende Detektoren können mit wesentlich höherer Pixelzahl beispielsweise bis zu 8000 Pixeln bereitgestellt werden. Die durch den linienartigen Objektbeleuchtungsbereich nunmehr ausgeleuchteten und im Detektor abgebildeten Abschnitte eines zu untersuchenden Objekts können somit mit entsprechend hoher Auflösung auch im Detektor selbst aufgenommen und entsprechend in hochaufgelöste Bilder umgesetzt werden. Da die Dimension der bei derartigen Pixeldetektoren vorhandenen Pixel quer zur Längserstreckung des Pixeldetektors im Allgemeinen deutlich kleiner sein wird, als die Breite des Bildes des linienartigen Objektbeleuchtungsbereichs in dieser Richtung, auch unter Berücksichtigung der im Detektionsstrahlengang erzeugten Vergrößerung, kann es vorteilhaft sein, zu langgestreckten "zweidimensionalen" Pixeldetektoren überzugehen, die beispielsweise eine Pixelzahl von 64 x 4096 aufweisen, also in der Längsrichtung des Objektbeleuchtungsbereichs bzw. des entsprechenden Bildes desselben eine wesentlich größere Pixelanzahl als quer dazu aufweisen.

Um mit einem derartigen System dann ein zu untersuchendes Objekt vollständig abbilden zu können bzw. ein komplettes Bild davon erzeugen zu können, kann eine Rasterung zwischen dem zu untersuchenden Objekt und dem Beleuchtungsstrahlengang bzw. dem Detektionsstrahlengang erfolgen, so dass im Prinzip das zu untersuchende Objekt linienartig abgetastet wird und die einzelnen dabei erzeugten Linienbilder dann zu einem gesamten Bild zusammengesetzt werden können.

Um dies zu erreichen, kann beispielsweise vorgesehen sein, dass die wenigstens eine Bewegungsanordnung dazu ausgebildet ist, eine Relativbewegung zwischen dem Objekt und dem linienartigen Objektbeleuchtungsbereich im Wesentlichen orthogonal zur Beleuchtungsachse und zur Detektionsrichtung zu erzeugen. Hierzu kann beispielsweise vorgesehen sein, dass die wenigstens eine Bewegungsanordnung dazu ausgebildet ist, das Objekt zur Erzeugung einer Relativbewegung zu bewegen.

Alternativ oder zusätzlich zu dieser Verlagerung des zu untersuchenden Objekts kann auch vorgesehen sein, dass die wenigstens eine Bewegungsanordnung dazu ausgebildet ist, den wenigstens einen Beleuchtungsstrahlengang wenigstens in dem durch diesen bereitgestellten linienartigen Objektbeleuchtungsbereich zur Erzeugung der Relativbewegung zu bewegen. Da dabei bei beispielsweise festgehaltenem Objekt der Objektbeleuchtungsbereich verschoben wird, ist es dann erforderlich, dass die wenigstens eine Bewegungsanordnung dazu ausgebildet ist, den wenigstens einen Detektionsstrahlengang in Anpassung an die Bewegung des wenigstens einen Beleuchtungsstrahlengangs wenigstens in seinem objektnahen Bereich zu bewegen.

Wie bereits vorangehend ausgeführt, kann der wenigstens eine Detektionsstrahlengang einen Detektor mit einer Vielzahl an Detektorpixeln aufweisen, wobei dann vorzugsweise vorgesehen sein kann, dass die Anzahl und die Positionierung der Detektorpixel des Detektors derart gewählt sind, dass der wenigstens eine Detektionsstrahlengang einen durch den wenigstens einen Beleuchtungsstrahlengang im Objektbeleuchtungsbereich beleuchteten Abschnitt des Objekts im Wesentlichen vollständig auf den Detektor abbildet.

Um mit dem erfindungsgemäßen System nicht nur eine flächenmäßige Abbildung eines zu untersuchenden Objekts erzeugen zu können, sondern dieses auch durch dreidimensionales Abtasten dreidimensional abbilden zu können, wird weiter vorgeschlagen, dass die wenigstens eine Bewegungsanordnung dazu ausgebildet ist, das zu untersuchende Objekt im Wesentlichen in Richtung der Detektionsrichtung des wenigstens einen Detektionsstrahlengangs zu bewegen.

Aus den vorangehenden Erläuterungen wird offensichtlich, dass es ein wesentliches Prinzip der vorliegenen Erfindung ist, mit wenigstens einem Beleuchtungsstrahlengang einen langgestreckten Objektbeleuchtungsbereich zu erzeugen, in dem dann ein zu untersuchendes Objekt positioniert werden kann, um durch Fluoreszenzanregung oder durch Streulichterzeugung in wenigstens einem Detektionsstrahlengang ein Bild des im Objektbeleuchtungsbereich positionierten Abschnitts des zu untersuchenden Objekts oder ggf. des gesamten Objekts zu erzeugen.

Gemäß der vorliegenden Erfindung wird daher weiter ein Mikroskop vorgeschlagen, das wenigstens einen Beleuchtungsstrahlengang und wenigstens einen Detektionsstrahlengang aufweist und dadurch gekennzeichnet ist, dass bei jedem Beleuchtungsstrahlengang eine Fokussieranordnung vorgesehen ist zur Erzeugung eines in Richtung einer Beleuchtungsachse des Beleuchtungsstrahlengangs ausgedehnten Objektbeleuchtungsbereichs, dass eine Detektionseinrichtung des wenigstens einen Detektionsstrahlengangs näherungsweise orthogonal zu dem Objektbeleuchtungsbereich steht, und dass eine Bewegungsanordnung vorgesehen ist zur Erzeugung einer Relativbewegung zwischen dem Objektbeleuchtungsbereich und einem zu untersuchenden Objekt.

Die Erfindung wird nachstehend anhand der beigefügten Zeichnungen näher erläutert. Es zeigen:
- Fig. 1: die schematische Darstellung des Strahlengangs in einer Aus- führungsform des erfindungsgemäßen Mikroskops, wobei ein einziger Beleuchtungsstrahlengang und ein einziger Detek- tionsstrahlengang vorhanden sind, betrachtet in Blickrichtung I der Fig. 2;
- Fig. 2: die in Fig. 1 dargestellte Ausführungsform in Blickrichtung II in Fig. 1;
- Fig. 3: eine Prinzipdarstellung des Beleuchtungsstrahlengangs, der von einer Zylinderlinse ausgeht und einen Objektbeleuch- tungsbereich im Bereich einer Fokuslinie bildet;
- Fig. 4: eine Draufsicht auf den Strahlengang der Fig. 3 in Blickrich- tung IV in Fig. 3;
- Fig. 5: die schematische Darstellung des Strahlengangs in einer wei- teren Ausführungsform des erfindungsgemäßen Mikroskops, wobei zwei Beleuchtungsstrahlengänge vorhanden sind;
- Fig. 6: eine weitere Prinzipdarstellung eines erfindungsgemäßen Mikroskops;
- Fig. 7: eine der Fig. 1 entsprechende Ansicht eines alternativ ausge- stalteten Mikroskops.

Die Fig. 1 zeigt eine Ausführungsform eines erfindungsgemäßen Mikroskops 100. Der Aufbau umfasst eine Lichtquelle 1, deren kollimierter Lichtstrahl 2 durch eine Zylinderlinse 3 in die Probe 4 fokussiert wird. Dabei entsteht ein dünner vertikaler Lichtstreifen 11, durch den in der Probe 4 Fluoreszenzemission induziert werden kann. Das emittierte Licht 5 wird durch eine Detektionsoptik 6 auf den flächigen Detektor 8, beispielsweise eine CCD-Kamera abgebildet.

Durch die rechtwinklige Anordnung ( = 90 Grad) von Beleuchtungs- 9 und Detektionsrichtung 10 ist der Aufbau besonders einfach. Insbesondere kann auf den Einsatz dichroitischer Spiegel für die Trennung von Beleuchtungs- und Fluoreszenzlicht im Detektionsstrahlengang 5 verzichtet werden. Die Filter 7 im Beleuchtungs- 2 und im Detektionsstrahlengang 5 sind Glasfilter oder akusto-/elektro-/magneto-optische Filter und erlauben die selektive Auswahl von Wellenlängen für die Beleuchtung und die Detektion.

Die Probe 4 wird durch eine Halterung 12 in einer Probekammer 13 gehalten und für die Bildaufnahme in Detektionsrichtung 10 durch die raumfeste Lichtebene 11 bewegt. Die Halterung 12 erlaubt außerdem die Drehung der Probe 4 um ihre senkrechte Achse 14, so dass die Probe 4 von mehreren Seiten beleuchtet und beobachtet werden kann.

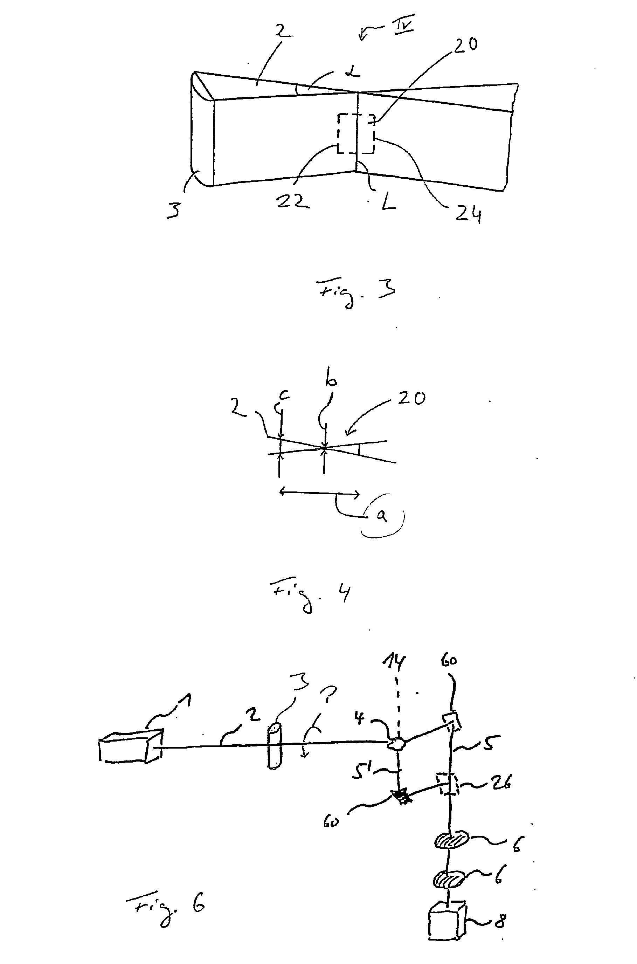

Die Fig. 3 und 4 zeigen in prinzipieller Art und Weise den vorangehend angesprochenen und unter Einsatz der Zylinderlinse 3 erzeugten Beleuchtungsstrahlengang 2. Durch die Zylinderlinse 3, deren Brennweite vorzugsweise im Bereich zwischen 10 mm und 100 mm liegen kann, wird das von der Lichtquelle 1 emittierte Licht unter einem vergleichsweise kleinen Winkel α fokussiert. Es entsteht im Bereich einer Fokuslinie L somit ein in der Fig. 3 strichliert eingezeichneter Objektbeleuchtungsbereich 20, der näherungsweise eine flächenartige bzw. ebenenartige Struktur bzw. Ausdehnung hat und beiderseits der Fokuslinie durch Zylinderabschnitte gebildet ist. Bei einer in Richtung der Beleuchtungsachse bzw. Beleuchtungsrichtung gemessenen Abmessung a dieses Objektbeleuchtungsbereichs 20 von etwa 5 mm und einer Dickenabmessung des Beleuchtungsstrahlengangs 2 im Bereich der Fokuslinie b von etwa 20 µm ergibt sich an den in Beleuchtungsrichtung gelegenen Endbereichen 22, 24 des Objektbeleuchtungsbereichs 20 eine Dickenabmessung c von näherungsweise 60 µm, was natürlich abhängt von der für die Zylinderlinse 3 vorgegebenen numerischen Apertur. Über den gesamten Objektbeleuchtungsbereich 20 hinweg ist also eine - bezogen auf die Abmessung der zu untersuchenden Objekte - vernachlässigbare Variation der Dicke des Objektbeleuchtungsbereichs 20 im Beleuchtungsstrahlengang 2 vorhanden, so dass insbesondere auch unter Berücksichtigung der Abmessungen der zu untersuchenden Objekte hier von einer in erster Näherung konstanten Dicke des Objektbeleuchtungsbereichs und somit einer flächenartigen bzw. ebenenartigen Struktur desselben ausgegangen werden kann.

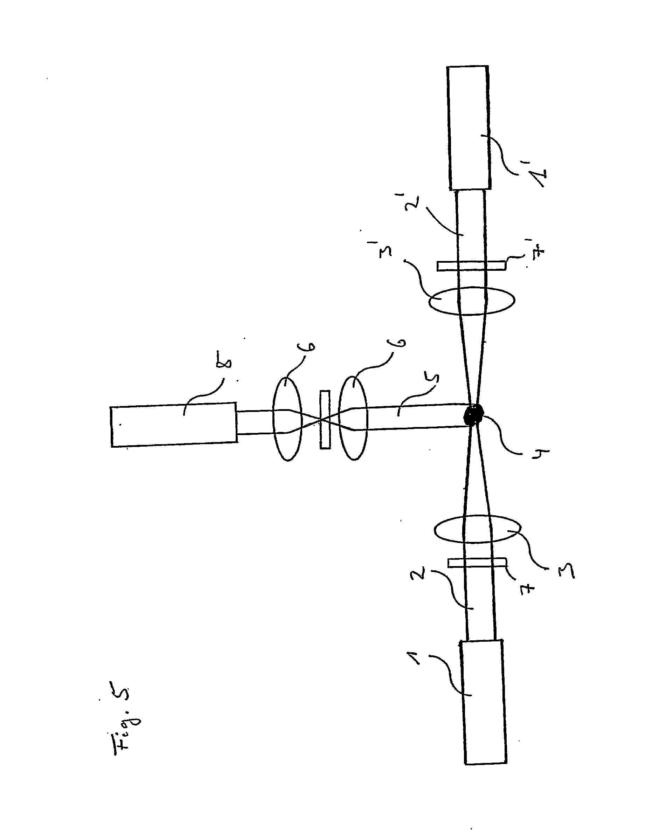

In der Fig. 5 ist eine abgewandelte Ausgestaltungsform des Mikroskops 100 dargestellt, bei welcher zwei Beleuchtungsstrahlengänge 2, 2' vorhanden sind. Im dargestellten Falle weist jeder dieser beiden Beleuchtungsstrahlengänge 2, 2', die einander entgegengesetzt gerichtete Beleuchtungsrichtungen, jedoch einanderentsprechende Beleuchtungsachsen aufweisen, jeweils eine Zylinderlinse 3, 3' mit ggf. zugeordnetem Filter 7, 7' sowie eine Lichtquelle 1, 1' auf. Bei einer Abwandlung dieser Ausgestaltungsform kann weiter vorgesehen sein, dass nur eine einzige Lichtquelle vorgesehen ist. Dabei entsteht durch Überlagerung der beiden Objektbeleuchtungsbereiche dieser Beleuchtungsstrahlengänge 2, 2', welche Objektbeleuchtungsbereiche vorangehend mit Bezug auf die Fig. 3 und 4 detaillierter geschildert worden sind, ein dünner vertikaler Lichtstreifen, der im Vergleich zu dem Lichtstreifen in der in Fig. 1 dargestellten Ausführungsform homogener ist. Das emittierte Licht 5 wird durch eine Detektionsoptik 6 auf den flächigen Detektor 8 abgebildet. Diese Ausführungsform des erfindungsgemäßen Mikroskops eignet sich besonders für absorbierende Proben, bei denen mit einer einseitigen Beleuchtung nicht die gesamte Probe beleuchtet werden kann.

Bei dieser Ausgestaltungsform besteht die Möglichkeit, die beiden Beleuchtungsstrahlengänge 2, 2' bzw. die Lichtstrahlen derselben durch definierte Einstellung der Phasenlage dieser Lichtstrahlen zueinander dort, wo die beiden Objektbeleuchtungsbereiche dieser beiden Beleuchtungsstrahlengänge 2, 2' einander überlagert sind, gezielt zur Interferenz zu bringen. Auf diese Art und Weise wird es möglich, in demjenigen Bereich, in dem das zu untersuchende Objekt bzw. Probe 4 zu beleuchten ist, durch destruktive Interferenz bestimmte Abschnitte auszublenden bzw. durch konstruktive Interferenz bestimmte Bereiche hervorzuheben, wodurch die Auflösung des Gesamtsystems weiter verbessert werden kann.

In Fig. 6 ist eine weitere Abwandlung des erfindungsgemäßen Mikroskops 100 angedeutet. Durch den Pfeil P wird angedeutet, dass die dort gezeigte Zylinderlinse 3 um die Beleuchtungsachse des Beleuchtungsstrahlengangs 2 gedreht werden kann, beispielsweise um 90°. Damit dreht sich auch der Objektbeleuchtungsbereich 20 dieses Beleuchtungsstrahlengangs 2, so dass er ausgehend von der in Fig. 2 gezeigten Orientierung, in welcher er im Wesentlichen in der Zeichenebene liegt, um 90° gedreht ist und dann senkrecht zur Zeichenebene steht. Auf diese Art und Weise wird es möglich, das zu untersuchende Objekt 4 aus einer anderen Richtung zu betrachten, nämlich der in der Darstellung der Fig. 2 unter diesem Objekt 4 liegenden Richtung. Es kann also ein weiterer Detektionsstrahlengang 5' vorgesehen sein, bei welchem dann bezüglich des in der Fig. 1 erkennbaren Detektionsstrahlengangs 5 das zu untersuchende Objekt 4 unter einem Winkel von 90° betrachtet werden kann, ohne dass dieses Objekt 4 selbst gedreht worden wäre.

Bei einem derartigen System ist es beispielsweise möglich, unter Einsatz von Spiegeln 60 und eines Kippspiegels 26 verschiedene Detektionsstrahlengänge 5, 5' wahlweise, je nach Stellung des Kippspiegels 26 zu ein und demselben Detektor 8 bzw. ein und demselben optischen System mit Objektiven 6 zu leiten. In Zuordnung zur Drehstellung der Zylinderlinse 3 wird also dann der Kippspiegel 26 entsprechend umgeschaltet. Selbstverständlich ist es möglich, zwei Detektionsstrahlengänge 5, 5' mit jeweils zugeordneter Objektivanordnung und Detektor voneinander unabhängig und beispielsweise unter einem Winkel von 90° vorzusehen. Weiter ist es möglich, zumindest eines dieser Systeme dann bewegbar zu gestalten, so dass es zusammen mit der Zylinderlinse 3 um die Beleuchtungsachse des Beleuchtungsstrahlengangs 2 in Fig. 2 gedreht werden kann, so dass bei gleichzeitiger Drehung der Zylinderlinse 3 und dieses Detektionsstrahlengangs dann eine Rundumaufnahme des zu untersuchenden Objekts 4 erzeugt werden kann, ohne dass dieses Objekt selbst bewegt worden wäre.

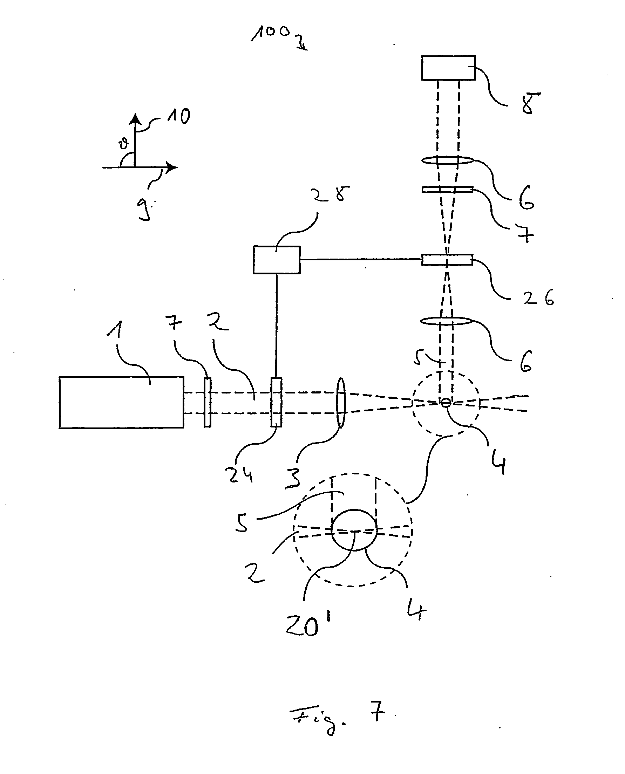

Ein alternativ ausgestaltetes Mikroskop 100 das außerhalt der vorliegenden Erfindung liegt ist in Fig. 7 dargestellt. Der grundsätzliche Aufbau bzw. auch die Betrachtungsweise sind so wie in Fig. 1, so dass allgemein auf die voranstehenden Ausführungen verwiesen werden kann. Es ist wieder ein im Wesentlichen durch den Lichtstrahl 2 bereitgestellter Beleuchtungsstrahlengang vorhanden, der unter Einsatz eines optischen Systems fokussiert wird, um einen Objektbeleuchtungsbereich 20' zu generieren. Die hier eingesetzte Linse 3 ist nunmehr keine Zylinderlinse, sondern eine bezüglich der Beleuchtungsachse 9 des Beleuchtungsstrahlengangs rotationssymmetrische Linse. Auf diese Art und Weise wird ein Objektbeleuchtungsbereich 20' erzeugt, der im Wesentlichen ebenfalls rotationssymmetrisch ist und somit insbesondere in demjenigen Bereich, in welchem auch das zu untersuchende Objekt 4 bzw. die Probe positioniert ist, als linearer Objektbeleuchtungsbereich bzw. linienartiger Objektbeleuchtungsbereich interpretiert werden kann. Die Abmessung dieses im Wesentlichen rotationssymmetrischen, linienartigen Objektbeleuchtungsbereichs kann, natürlich abhängig von der Brennweite der Linse 3 bzw. des eingesetzten optischen Systems im Zentrum im Bereich von 10 - 20 µm liegen, während in den Randbereichen eine Abmessung im Bereich von 40 - 60 µm vorliegt.

Bei diesem in Fig. 7 gezeigten Mikroskop 100 wird also bei Positionierung einer Probe 4 im Objektbeleuchtungsbereich 20' kein scheiben- oder flächenartiger Bereich der Probe 4 ausgeleuchtet, sondern ein entsprechend linienartiger Bereich. Das im Detektionsstrahlengang 5 erzeugte Bild dieses linienartig ausgeleuchteten Bereichs wird über das optische System desselben auf den Detektor 8 abgebildet, so dass dort ein ggf. vergrößertes Linienbild generiert wird. Der Detektor 8 ist als Pixeldetektor aufgebaut und weist in Anpassung an das nunmehr erzeugte linienartige Bild eine mehr "eindimensionale" Pixelanordnung auf. Bei dieser Anordnung ist die Positionierung der Pixel so, dass eine wesentlich größere Anzahl der Pixel in der Längsrichtung des erzeugten linienartigen Bildes aufeinander folgt, als quer dazu. Vorzugsweise ist die Anzahl der Pixel in der Längsrichtung bzw. der Querrichtung so gewählt, dass das im Detektionsstrahlengang 5 erzeugte linienartige Bild vollständig durch den Detektor 8 aufgenommen werden kann, ohne diesen bewegen zu müssen. Im Extremfall ist es jedoch auch möglich, eine einzige Reihe von Pixeln vorzusehen. Hierbei ist zu berücksichtigen, dass mit abnehmender Breite eines derartigen Pixelfeldes und mehr und mehr auftretendem Übergang zu einer einzigen Pixellinie die Anzahl der in einer solchen linienartigen Anordnung vorhandenen Pixel erhöht werden kann und insofern die Auflösung des Detektors 8 in dieser Richtung entsprechend erhöht werden kann.

Um mit diesem in Fig. 7 dargestellten nunmehr auch bedingt durch den möglichen Aufbau des Detektors 8 hochauflösenden Mikroskop 100 vollständige Bilder der Probe 4 erzeugen zu können, wird eine Relativbewegung dieser Probe 4 bezüglich des linienartigen Objektbeleuchtungsbereichs 20' erzeugt. Hierzu gibt es grundsätzlich verschiedene Möglichkeiten. Zum einen kann die Probe 4 orthogonal zum linienartigen Objektbeleuchtungsbereich und auch orthogonal zum Detektionsstrahlengang 5 verschoben werden, also in der Darstellung der Fig. 7 senkrecht zur Zeichenebene. Auf diese Art und Weise werden rasterartig nach und nach linienartige Bereiche der Probe 4 ausgeleuchtet, so dass durch Zusammenfügen der entsprechend aufgenommenen Bilder ein Gesamtbild der Probe 4 in einer Ebene erzeugt werden kann. Um ein dreidimensionales Bild zu generieren, kann die Probe auch noch in Richtung des Detektionsstrahlengangs 5 bzw. der Detektionsrichtung 10 verschoben werden, so dass verschiedene Ebenen der Probe 4 durch die Fokalebene des Beleuchtungsstrahlengangs 5 hindurch bewegt werden.

Bei einer alternativen, in der Fig. 7 dargestellten Variante kann die Probe 4 ortsfest gehalten werden, während sowohl im Beleuchtungsstrahlengang 2 als auch im Detektionsstrahlengang 5 Vorrichtungen 24 und 26 vorgesehen sind, die für eine Verschiebung dieser beiden Strahlengänge 2, 5 in ihrem probennahen Bereich sorgen. Diese Vorrichtungen 24, 26 können beispielsweise Strahlenablenkeinheiten sein, die beispielsweise je einen verkippbaren Spiegel umfassen. Die beiden Strahlenablenkeinheiten 24, 26 stehen unter der Ansteuerung einer Steuervorrichtung 28, um ihre Bewegung aufeinander abzustimmen, so dass sichergestellt ist, dass auch immer derjenige Bereich der Probe 4, der momentan vom Objektbeleuchtungsbereich 20' ausgeleuchtet wird, durch den Detektionsstrahlengang 5 auf den Detektor 8 abgebildet wird. Auf diese Art und Weise ist ein Abscannen der ansonsten nicht senkrecht zur Zeichenebene der Fig. 7 zu bewegenden Probe in einer Ebene möglich. Auch hier kann zum Erhalten einer dreidimensionalen Darstellung dann die Probe 4 wieder in der Detektionsrichtung 10 verschoben werden, um aufeinander folgend mehrere Ebenen abzutasten.

Selbstverständlich ist es auch möglich, die beiden vorangehend angesprochenen Möglichkeiten zur Erzeugung einer Relativbewegung zwischen der Probe 4 einerseits und den Strahlengängen andererseits zu kombinieren, wobei zu berücksichtigen ist, dass das Bewegen der Strahlengänge schneller erfolgen kann, als das Bewegen der Probe.

Mit dem in Fig. 7 dargestellten System wird es also möglich, hochauflösende "eindimensionale" bzw. langgestreckte Pixelfelder im Detektor 8 einzusetzen, um somit entsprechend hochaufgelöste Bilder der jeweiligen ausgeleuchteten Bereiche der Probe 4 erzeugen zu können. Ein weiterer Vorteil dieses "Abtastens" der Probe 4 ist, dass die Lage des Objektbeleuchtungsbereichs verbessert auf das Sichtfeld der Detektionsoptik abgestimmt werden kann bzw. dass Bereiche, die nicht abgebildet werden sollen, auch überhaupt nicht abgetastet bzw. beleuchtet werden müssen und insofern auch keine Beeinträchtigung der Abtastung bzw. Abbildung anderer interessanterer Bereiche entsteht. Weiterhin wird durch diese Rasterbewegung des linienartigen Objektbeleuchtungsbereichs bezüglich der zu untersuchenden Probe über die Zeit hinweg eine Beleuchtungsebene bzw. ein flächiger Objektbeleuchtungsbereich generiert, der eine homogenere Intensität in Richtung der Relativbewegung aufweist, als dies bei entsprechender Strahlaufweitung bei den vorangehend beschriebenen Systemen der Fall ist, da das Intensitätsprofil im Objektbeleuchtungsbereich dort auch vom Intensitätsprofil des fokussierten Lichtstrahls abhängig ist. Darüber hinaus lassen sich durch die stärkere Fokussierung des Lichts höhere Intensitäten erreichen. Die Laserleistung wird so effizienter genutzt, was besonders bei schwacher Fluoreszenz oder bei Mehrphotonenanregung vorteilhaft ist.

Es sei darauf hingewiesen, dass selbstverständlich verschiedene Aspekte des erfindungsgemäßen Mikroskops, wie beispielsweise das Bereitstellen verschiedener Anzahlen an Beleuchtungsstrahlengängen und Detektionsstrahlengängen bzw. die Relativpositionierung und Phaseneinstellung derselben, die Maßnahmen zum Bewegen eines Objekts durch Verschiebung oder Drehung oder zum Bewegen des optischen Systems bei beispielsweise festgehaltenem Objekt, unabhängig davon realisiert sein können, ob der Objektbeleuchtungsbereich flächenartig ausgedehnt ist oder im Wesentlichen strahlenartig bzw. linienartig ausgebildet ist.

Die Erfindung betrifft ein Mikroskop, bei dem eine Schicht der Probe durch einen dünnen Lichtstreifen 11 beleuchtet wird und die Beobachtung senkrecht zu der Ebene des Lichtstreifens erfolgt. Die Dicke des Lichtstreifens 11 bestimmt somit wesentlich die Schärfentiefe des Systems. Für die Bildaufnahme wird das Objekt 4 durch den bezüglich des Detektors feststehenden Lichtstreifen 11 bewegt, und Fluoreszenz- oder/und Streulicht wird mit einem flächigen Detektor aufgenommen. Stark absorbierende oder stark streuende Objekte 4 werden aus mehreren Raumrichtungen beobachtet. Die dreidimensionalen Aufnahmen, die aus jeder Richtung gemacht werden, können nachträglich zu einer Aufnahme kombiniert werden, in der die Daten entsprechend ihrer Auflösung gewichtet werden. Die Auflösung der kombinierten Aufnahme wird dann durch die laterale Auflösung der einzelnen Aufnahmen dominiert.

## Patentansprüche

1. Mikroskop mit wenigstens einem Beleuchtungsstrahlengang (2; 2, 2') und wenigstens einem Detektionsstrahlengang (5), wobei
bei dem wenigstens einen Beleuchtungsstrahlengang (2; 2, 2') eine Fokussieranordnung (3; 3, 3') vorgesehen ist zur Erzeugung eines in Richtung einer Beleuchtungsachse des Beleuchtungsstrahlengangs (2; 2, 2') und quer dazu ausgedehnten Objektbeleuchtungsbereichs (20),
eine Detektionsrichtung (10) des wenigstens einen Detektionsstrahlengangs (5) näherungsweise orthogonal zu dem Objektbeleuchtungsbereich (20) steht, und eine Bewegungsanordnung mit einer Halterung (12) vorgesehen ist zur Erzeugung einer Relativbewegung zwischen dem Objektbeleuchtungsbereich (20) und einem zu untersuchenden Objekt (4);
und wobei das Mikroskop zusätzlich eine Probekammer (13) aufweist und das zu untersuchende Objekt (4) auf der Halterung (12) innerhalb der Probenkammer (13) angeordnet ist,
**dadurch gekennzeichnet,**
**dass** die Halterung (12) zumindest eine in Schwerkraftrichtung liegende Rotationsachse (14) aufweist, damit das zu untersuchende Objekt (4) um die in Schwerkraftrichtung liegende Rotationsachse (14) drehbar ist und
**dadurch** dass der in Richtung der Beleuchtungsachse des Beleuchtungsstrahlengangs (2; 2, 2') und quer dazu ausgedehnte Objektbeleuchtungsbereich (20) ein dünnen vertikaler Lichtstreifen ist.

2. Mikroskop nach Anspruch 1,
wobei die in Schwerkraftrichtung liegende Rotationsachse (14) im Wesentlichen orthogonal zu der Beleuchtungsachse und im Wesentlichen orthogonal zu der Detektionsrichtung (10) ist.

3. Mikroskop nach einem der vorangehenden Ansprüche, **dadurch gekennzeichnet,**
**dass** durch die Bewegungsanordnung (12) eine Drehbewegung des Objekts (4) oder/und eine Verschiebebewegung des Objekts (4) erzeugbar ist.

4. Mikroskop nach einem der vorangehenden Ansprüche,
**dadurch gekennzeichnet, dass** die Bewegungsanordnung(12) dazu ausgebildet ist, bei im Wesentlichen feststehendem Objektbeleuchtungsbereich (20) das Objekt (4) zu bewegen.

5. Mikroskop nach einem der Ansprüche 1 bis 3,
**dadurch gekennzeichnet, dass** die Bewegungsanordnung (12) dazu ausgebildet ist, bei im Wesentlichen feststehendem Objekt (4) den Objektbeleuchtungsbereich (20) zu bewegen.

6. Mikroskop nach einem der vorangehenden Ansprüche,
**dadurch gekennzeichnet, dass** der wenigstens eine Beleuchtungsstrahlungsgang (2; 2, 2') eine Zylinderlinse (3; 3, 3') zum Fokussieren des Beleuchtungslichts aufweist.

7. Mikroskop nach Anspruch 6,
**dadurch gekennzeichnet, dass** die Zylinderlinse (3; 3, 3') um die Beleuchtungsachse drehbar ist oder/und in Richtung der Beleuchtungs- oder/und der Zylinderachse verschiebbar ist oder/und mit der Zylinderachse bezüglich der Beleuchtungsachse kippbar ist.

8. Mikroskop nach Anspruch 7,
**dadurch gekennzeichnet, dass** die Bewegung der Zylinderlinse (3; 3, 3') eine hochfrequente Bewegung ist.

9. Mikroskop nach einem der vorhergehenden Ansprüche,
**dadurch gekennzeichnet, dass** Streulicht oder Fluoreszenzlicht einer oder mehrerer Wellenlängen verwendet wird.

10. Mikroskop nach einem der vorhergehenden Ansprüche,
**dadurch gekennzeichnet, dass** die Lichtquelle (1; 1, 1') eine Lampe oder ein Laser ist, die Licht einer oder mehrerer Wellenlängen zur Verfügung stellen.

11. Mikroskop nach einem der vorhergehenden Ansprüche,
**dadurch gekennzeichnet, dass** wenigstens zwei Beleuchtungsstrahlengänge (2, 2') mit im Wesentlichen entgegengesetzter Beleuchtungsrichtung vorgesehen sind zur Erzeugung sich wenigstens bereichsweise überlappender Objektbeleuchtungsbereiche (20).

12. Mikroskop nach Anspruch 11,
**dadurch gekennzeichnet, dass** das Beleuchtungslicht der beiden Beleuchtungsstrahlengänge (2,2') in Richtung der Beleuchtungsachse im Bereich des Objektbeleuchtungsbereichs (20) wenigstens bereichsweise interferiert.

13. Mikroskop nach Anspruch 12,
**dadurch gekennzeichnet, dass** das Beleuchtungslicht der beiden Beleuchtungsstrahlengänge (2, 2') eine konstante, einstellbare Phase aufweist.

14. Mikroskop nach einem der vorhergehenden Ansprüche,
**dadurch gekennzeichnet, dass** der wenigstens eine Detektionsstrahlengang (5) einen Detektor aufweist und dass der Detektor seitlich bezüglich der Detektionsrichtung des wenigstens einen Detektionsstrahlengangs (5) bewegbar ist.

15. Mikroskop nach einem der vorhergehenden Ansprüche,
**dadurch gekennzeichnet, dass** der wenigstens eine Detektionsstrahlengang (5; 5') derart anpassbar ist, dass die Detektionsrichtung bei Verlagerung des Objektbeleuchtungsbereichs (20) näherungsweise orthogonal zu dem Objektbeleuchtungsbereich (20) liegt.

## Claims

1. A microscope with at least one illumination beam path (2; 2, 2') and at least one detection beam path (5), wherein
the at least one each illumination beam path (2; 2, 2') is provided with a focusing arrangement (3; 3, 3') for producing an object illumination region (20) which extends in the direction of an illumination axis of the illumination beam path (2; 2, 2') and transversely thereto,
a detection direction (10) of the at least one detection beam path (5) is substantially orthogonal to the object illumination region (20) and a mobile arrangement is provided with a holder (12) for producing a relative movement between the object illumination region (20) and an object to be studied (4);
and wherein the microscope further comprises a sample chamber (13) and the object to be studied in arranged on the holder (12) with the sample chamber (13), **characterized in that**
the holder (12) comprises at least one rotational axis in the direction of gravity, such that the object to be studied (4) is arranged rotable about the rotational axis (14) which is arranged in the direction of gravity; and
**in that** the object illumination region (20) extending in the direction of the illumination axis of the illumination beam path (2; 2, 2') and transversely thereto is a thin vertical light stripe.

2. The microscope of claim 1, wherein the rotational axis (14) lying in the direction of gravity is substantially orthogonal to the illumination axis and substantially orthogonal to the detection direction (10).

3. Microscope of any one of the proceeding claims, **characterized in that** a rotational movement of the object (4) or/and a translational movement of the object (4) is produceable by the mobile arrangement (12).

4. Microscope of any one of the proceeding claims, **characterized in that** the mobile arrangement (12) is adapted to move the object (4) while the object illumination region (20) is essentially fixed.

5. Microscope of any one of claims 1 to 3, **characterized in that** the mobile arrangement (12) is adapted to move the object illumination region (20) while the object (4) is essentially fixed.

6. Microscope of any one of the proceeding claims, **characterized in that** the at least one illumination beam path (2; 2, 2') comprises a cylindrical lens (3; 3, 3') for focusing the illumination light.

7. Microscope of claim 6, **characterized in that** the cylindrical lens (3; 3, 3') is rotable about the illumination axis and/or movable in the direction of the illumination and/or cylinder axis, or/and the cylinder axis is tiltable with respect to the illumination axis.

8. Microscope of claim 7, **characterized in that** the movement of the cylindrical lens (3; 3, 3') is a high-frequency movement.

9. Microscope of any one of the proceedings claims, **characterized in that** scattered light or fluorescent light of one or more wavelengths is used.

10. Microscope of any one of the proceedings claims, **characterized in that** the light source (1; 1, 1') is a lamp or a laser providing light of one or more wavelengths.

11. Microscope of any one of the proceedings claims, **characterized in that** at least two illumination beam paths (2, 2') with essentially opposite illumination directions are provided for producing at least partially overlapping object illumination regions (20).

12. Microscope of claim 11, **characterized in that** the illumination light of both illumination beam paths (2, 2') interfere at least in some areas in the direction of the illumination axis in the region of object illumination region (20).

13. Microscope of claim 12, **characterized in that** the illumination light of both illumination beam paths (2, 2') has a constant, adjustable phase.

14. Microscope of any one of the proceedings claims, **characterized in that** the at least one detection beam path (5) comprises a detector and that the detector is laterally movable with respect to the detection direction of the at least one detection beam path (5).

15. Microscope of any one of the proceedings claims, **characterized in that** the at least one detection beam path (5, 5') is adjustable such that the detection direction is substantially orthogonal to the object illumination region (20) when the object illumination region (20) is displaced.

## Revendications

1. Microscope avec au moins un chemin de faisceau d'illumination (2 ; 2') et au moins un chemin de faisceau de détection (5), dans lequel
un dispositif de focalisation (3 ; 3') est prévu pour le au moins un chemin de faisceau d'illumination, pour engendrer une zone d'illumination d'objet (20) qui s'étend dans la direction d'un axe d'illumination du chemin de faisceau d'illumination dans la direction d'un axe d'illumination et, transversalement à celui-ci,
une direction de détection (10) du au moins un chemin de faisceau de détection (5) est située sensiblement orthogonalement à la zone d'illumination d'objet (20), et un dispositif de mouvement est prévu avec une fixation (12) pour engendrer un mouvement relatif entre la zone d'illumination d'objet (20) et un objet à examiner (4) ;
et dans lequel le microscope comprend, en outre, un compartiment pour échantillon (13), et l'objet à examiner (4) est agencé sur la fixation (12) à l'intérieur du compartiment pour échantillon,
**caractérisé en ce que**
la fixation (12) comprend au moins un axe de rotation (14) agencé dans la direction de la force de pesanteur, de sorte que l'objet à identifier (4) est pivotant autour de l'axe de rotation (14) agencé dans la direction de la force de pesanteur, et
la zone d'illumination d'objet (20) s'étendant dans la direction de l'axe d'illumination du chemin de faisceau d'illumination (2 ; 2') et transversalement à celle-ci/celui-ci, est une bande de lumière mince et verticale.

2. Microscope selon la revendication 1, dans lequel l'axe de rotation agencé dans la direction de la force de pesanteur (14) est sensiblement orthogonal à l'axe d'illumination et sensiblement orthogonal à la direction de détection (10).

3. Microscope selon l'une quelconque des revendications précédentes, **caractérisé en ce qu'**un mouvement de rotation de l'objet (4) et/ou un mouvement de translation de l'objet (4) peut être engendré par l'intermédiaire du dispositif de mouvement (12).

4. Microscope selon l'une quelconque des revendications précédentes, **caractérisé en ce que** le dispositif de mouvement (12) est agencé pour bouger l'objet (4), la zone d'illumination d'objet (20) étant sensiblement immobile.

5. Microscope selon l'une des revendications 1 à 3, **caractérisé en ce que** le dispositif de mouvement (12) est agencé pour déplacer la zone d'illumination d'objet (20), l'objet (4) étant sensiblement immobile.

6. Microscope selon l'une quelconque des revendications précédentes, **caractérisé en ce que** ledit au moins un chemin de faisceau d'illumination (2 ; 2') comprend une lentille cylindrique (3 ; 3') pour concentrer la lumière d'illumination.

7. Microscope selon la revendication 6, **caractérisé en ce que** la lentille cylindrique (3 ; 3') est pivotante par rapport à l'axe d'illumination et/ou est mobile en translation dans la direction d'illumination et/ou de l'axe de cylindre, et/ou peut basculer avec l'axe de cylindre par rapport à l'axe d'illumination.

8. Microscope selon la revendication 7, **caractérisé en ce que** le mouvement de la lentille cylindrique (3 ; 3') est un mouvement à haute fréquence.

9. Microscope selon l'une quelconque des revendications précédentes, **caractérisé en ce que** de la lumière de diffusion ou de la lumière de fluorescence d'une ou plusieurs longueurs d'onde sont utilisées.

10. Microscope selon l'une quelconque des revendications précédentes, **caractérisé en ce que** la source lumineuse (1 ; 1') est une lampe ou un laser, fournissant de la lumière dans une ou plusieurs longueurs d'onde.

11. Microscope selon l'une quelconque des revendications précédentes, **caractérisé en ce qu'**au moins deux chemins de faisceau d'illumination (2 ; 2') sont prévus avec des directions d'illumination essentiellement opposées, pour engendrer des zones d'illumination d'objets (20) qui se recouvrent au moins partiellement.

12. Microscope selon la revendication 11, **caractérisé en ce que** la lumière d'illumination des deux chemins de faisceau d'illumination (2 ; 2') interfèrent au moins dans certaines zones dans la direction de l'axe d'illumination dans la région du domaine d'illumination d'objet (20).

13. Microscope selon la revendication 12, **caractérisé en ce que** la lumière d'illumination des deux chemins de faisceau d'illumination (2 ; 2') comprend une phase constante, qui peut être ajustée.

14. Microscope selon l'une quelconque des revendications précédentes, **caractérisé en ce que** ledit au moins un chemin de faisceau de détection (5) comprend un détecteur, et le détecteur est mobile latéralement par rapport à la direction de détection dudit au moins un chemin de faisceau de détection (5).

15. Microscope selon l'une quelconque des revendications précédentes, **caractérisé en ce que** ledit au moins un chemin de faisceau de détection (5 ; 5') est ajustable de sorte que la direction de détection s'étend sensiblement orthogonalement à la zone d'illumination d'objet (20), par déplacement de la zone d'illumination d'objet (20).
